# EUROPÄISCHE PATENTSCHRIFT

(11) **EP 1 482 530 B1**
(45) Veröffentlichungstag und Bekanntmachung des Hinweises auf die Patenterteilung: **31.01.2007**
(21) Anmeldenummer: 04009382.5
(22) Anmeldetag: 21.04.2004
(51) Int. Cl.: H01H 85/20

(54) **Sicherungsdose für ein Fahrzeug**
Fuse box for a vehicle
Boîte à fusible pour un véhicule

(30) Priorität: 24.05.2003 DE 10323550
(43) Veröffentlichungstag der Anmeldung: 01.12.2004
(73) Patentinhaber: LEONI Bordnetz-Systeme GmbH, 90402 Nürnberg (DE)
(72) Erfinder: Friedrich, Norbert, 96181 Rauhenebrach (DE); Mc Dermott, Dean, Birmingham B35 6QU (GB)
(74) Vertreter: Tergau & Pohl Patentanwälte

(56) Entgegenhaltungen:
- DE-U- 20 001 196
- DE-U- 29 607 130
- US-A- 4 355 853
- US-A- 5 438 310

## Beschreibung

Die Erfindung betrifft eine Sicherungsdose für ein Fahrzeug mit den Merkmalen des Oberbegriffs des Patentanspruchs 1.

Eine derartige Sicherungsdose, auch als Vorsicherungsdose bezeichnet, ist in der US 5,438,310 beschrieben. Die Sicherungsdose wird im Kraftfahrzeugbereich üblicherweise unmittelbar in Batterienähe im Motorraum angeordnet. Über die Sicherungsdose sind die einzelnen Teilbereiche eines Bordnetzes abgesichert. Für die Absicherung einzelner Verbraucher können weitere Sicherungen dezentral, beispielsweise im Fahrgastinnenraum, angeordnet sein. Die Sicherungsdose weist eine Stromschiene mit einer Batterieanschlussklemme auf, über die die Sicherungsdose mit der Batterie des Fahrzeugs im montierten Zustand verbunden ist. Über die Stromschiene erfolgt eine Verteilung der von der Batterie bereitgestellten Energie auf die einzelnen Teilbereiche des Bordnetzes.

Aus der DE 199 59 272 A1 ist eine als Vorabsicherungsdose bezeichnete Sicherungsdose zu entnehmen, die eine zweigeteilte Stromschiene aufweist, damit die Sicherungsdose sowohl für Einbatterie-Systeme als auch für Zweibatterie-Systeme ohne größere Modifikationen am Bordnetz eingesetzt werden kann. Ein weiteres Beispiel für eine Vorsicherungsdose ist beispielsweise aus der DE 296 07 130 U1 zu entnehmen.

Der Aufbau des Bordnetzes richtet sich üblicherweise nach den individuellen Kundenwünschen, so dass selbst bei einem bestimmten Fahrzeugtyp unterschiedliche Bordnetzvarianten wegen unterschiedlicher Ausstattungsvarianten bestehen. Aufgrund der Vielzahl der mittlerweile im Fahrzeugbereich eingesetzten elektrischen Verbraucher können sich die Bordnetzvarianten zwischen einer Basisausstattung und einer gehobenen Komfortausstattung in ihrem Umfang erheblich unterscheiden. Auch im LKW- oder Baufahrzeugbereich können sich die Bordnetze in ihrem Umfang erheblich unterscheiden, in Abhängigkeit davon, welche zusätzlichen Funktionalitäten und damit zusätzliche Verbraucher für das Fahrzeug vorgesehen sind. Da die Energieverteilung an die Verbraucher über die Sicherungsdose erfolgt, muss diese für die maximale Bordnetzvariante ausgelegt sein. Zudem ist von Vorteil, wenn weiterer Raum für eventuelle Nachrüstungen frei bleibt. Eine für die maximale Bordnetzvariante ausgelegte Sicherungsdose ist für die Bordnetzvariante in der Basisausstattung überdimensioniert und beansprucht einen großen Einbauraum. Dieser ist jedoch bei modernen Fahrzeugen im Motorraum eng begrenzt.

Der Erfindung liegt die Aufgabe zugrunde, eine Sicherungsdose anzugeben, die für ein breites Spektrum an Bordnetz-Varianten geeignet ist.

Die Aufgabe wird gelöst durch eine Sicherungsdose mit den Merkmalen nach Patentanspruch 1. Danach umfasst die Sicherungsdose ein Gehäuse, welches zur Befestigung einer Erweiterungsbox ausgebildet ist. Die Sicherungsdose beruht daher auf einem modularen Konzept, umfassend eine Grundbox und eine Erweiterungsbox. Durch diese Maßnahme braucht die Grundbox lediglich für ein Bordnetzsystem einer Grund- oder Basisausstattung vorbestimmten Umfangs ausgelegt zu sein. Erst wenn ein bestimmter Ausstattungsumfang erreicht wird oder gegebenenfalls elektrische Verbraucher nachgerüstet werden und die Basisbox nicht mehr ausreichend ist, wird das Sicherungsdosen-Modulkonzept durch die Anordnung der Erweiterungsbox geeignet aufgestockt. Durch die Befestigung der Erweiterungsbox am Gehäuse der Grundbox wird der zusätzliche Verdrahtungsaufwand gering gehalten, insbesondere besteht dadurch die Möglichkeit, auf gewisse Funktionalitäten, welche in der Grundbox enthalten sind, zurückzugreifen. Ein weiterer Vorteil der Ergänzung über die Erweiterungsbox besteht darin, dass die Grundbox bei der Erweiterung des Bordnetz-Systems nicht modifiziert zu werden braucht, und insbesondere auch nicht geöffnet werden muss. Dies ist im Hinblick auf sicherheitstechnische Belange von besonderem Interesse, da bei unsachgemäßer Behandlung oder Manipulation erhebliche Folgeschäden auftreten können.

Für eine einfache und platzsparende Kontaktierung der Stromschienen sind Durchbrechungen an der Basisbox und bevorzugt auch an der Erweiterungsbox vorgesehen oder vorbereitet. Die Stromschienen sind daher im jeweiligen Gehäuse der Basisbox bzw. der Erweiterungsbox vollständig integriert und stehen nicht über.

Im Hinblick auf das modularen Gesamtkonzept, bei dem die Basisbox prinzipiell auch alleine eingesetzt werden kann und nur bei Bedarf um die Erweiterungsbox erweitert wird, ist hierbei vorgesehen, dass die Basisbox im Grundzustand, also ohne angeschlossener Erweiterungsbox, geschlossen ist, dass also insbesondere die Druchbrechung zur der in der Basisbox angeordneten Stromschiene geschlossen ist. Die Stromschiene ist also von Außen nicht zugänglich.

In einer zweckdienlichen Weiterbildung ist vorgesehen, dass die erste Stromschiene zur Kontaktierung mit der zweiten Stromschiene ausgebildet ist. Hierdurch wird also die zweite Stromschiene über die erste Stromschiene und die der ersten Stromschiene zugeordnete Batterieanschlussklemme mit der Batterie verbunden. Durch diese Maßnahme entfällt daher die Notwendigkeit eines zweiten separaten Batterieanschlusses für die Erweiterungsbox.

Die Erweiterungsbox weist daher gemäß einer bevorzugten Weiterbildung - abgesehen von der Kontaktierung der beiden Stromschienen - nur ausgangsseitige Anschlüsse zu den Bordnetzteilen auf. Die Stromversorgung der Erweiterungsbox erfolgt ausschließlich über die erste Stromschiene der Basisbox.

Im Hinblick auf eine möglichst einfache Kontaktierung der beiden Stromschienen sind diese bevorzugt unmittelbar miteinander kontaktierbar ausgebildet bzw. bei montierter Erweiterungsbox sind sie unmittelbar miteinander kontaktiert.

Für eine einfache Verbindung der Basisbox und der Erweiterungsbox sind diese aufeinander stapelbar ausgebildet. Alternativ hierzu sind sie nebeneinander aufreihbar.

Zur Kontaktierung der beiden Stromschienen sind mehrere bevorzugte Alternativen vorgesehen, die in den Unteransprüchen 5 - 12 niedergelegt sind.

In einer bevorzugten Ausgestaltung sind die Stromschienen dabei derart ausgebildet und angeordnet, dass Sie beim Verbinden des Gehäuses der Basisbox mit der Erweiterungsbox automatisch miteinander kontaktiert werden. Dies erlaubt eine einfache und schnelle Montage, ohne dass aufwändige Maßnahmen erforderlich wären. Insbesondere erfolgt dabei die Kontaktierung der zweiten Stromschiene mit der ersten Stromschiene ohne dass ein Eingriff an der Basisbox vorgenommen werden muss. Beispielsweise muss der üblicherweise versiegelte Deckel nicht abgenommen werden. Es ist vielmehr ausreichend, wenn die Basisbox zur Kontaktierung der zweiten Stromschiene einen hierfür vorgesehenen separaten und isnbesondere über die Durchbrechung gebildeten Anschlussbereich aufweist.

Im Hinblick auf eine einfache Montage sind die beiden Boxen vorzugsweise über eine Schraub- oder Rastverbindung miteinander verbunden, insbesondere aneinander oder aufeinander gesteckt oder gereiht. Dabei erfolgt die Verbindung der beiden Boxen vorzugsweise im Bereich der Stromschienen, um eine sichere Kontaktierung der beiden Stromschienen zu gewährleisten.

Um eine besonders sichere Kontaktierung der Stromschienen zu gewährleisten, sind diese im verbundenen Zustand der beiden Boxen durch die Schraub- bzw. Rastverbindung, über die die beiden Boxen miteinander verbunden sind, geführt. Dies hat den wesentlichen Vorteil, dass mit der von der Schraub- oder Rastverbindung ausgeübten Verbindungskraft nicht nur die beiden Boxen, sonder zugleich auch die beiden Stromschienen miteinander kontaktiert, insbesondere gegeneinander verspannt oder gepresst werden.

Für ein Gegeneinanderverspannen sind die Stromschienen im Bereich ihrer gegenseitigen Kontaktflächen federnd gehalten. Um dies zu erreichen, ist zweckdienlicherweise ein Widerlager für die jeweilige Stromschiene vorgesehen.

Ausführungsbeispiele der Erfindung werden im Folgenden anhand der Zeichnung näher erläutert. Es zeigen jeweils in schematischen und teilweise grob vereinfachten Darstellungen:
- Fig. 1: eine Sicherungsdose umfassend eine Grundbox mit aufgestapelter Erweiterungsbox in einer perspektivischen Darstellung,
- Fig. 2: eine Aufsicht auf eine an eine Grundbox angereihte Erweiterungsbox,
- Fig. 3: eine Schnittansicht durch den Kontaktbereich der beiden Stromschienen, die über eine Stromleitplatte miteinander verbunden sind,
- Fig. 4: eine Schnittdarstellung, bei der die beiden Stromschienen über ein Verbindungselement unmittelbar miteinander kontaktiert sind,
- Fig. 5A: eine Schnittdarstellung einer Schnapp- oder Rastverbindung gemäß einer ersten Ausführungsvariante
- Fig. 5B: eine perspektivische Darstellung eines der Teile der in Fig. 5A gezeigten Rastverbindung,
- Fig. 5C: eine modifizierte Ausgestaltung der Rastverbindung, der ersten Ausführungsvariate
- Fig. 5D,5E: Beispiele für Stromschienen mit einer profilierten Stirnfläche,
- Fig. 6A: eine Schnittdarstellung einer Schraubverbindung zur Verbindung der beiden Boxen gemäß einer zweiten Ausführungsvariante
- Fig. 6B: eine perspektivische Darstellung eines Teils einer solchen Schraubverbindung,
- Fig. 6C: die erste und zweite Stromschiene die zur Ausbildung einer Klemmverbindung komplementär ausgebildet sind,
- Fig. 6D: ein Widerlager in einer Seitenansicht
- Fig. 7A: eine dritte Ausführungsvariante, bei der die Stromschienen federnd ausgebildet sind und entgegen der Federkraft gegeneinander gepresst sind,
- Fig. 7B: die Ausgestaltung einer weiteren Rastverbindung
- Fig. 7C: eine perspektivische Ansicht eines der in Fig. 7B dargestellten Teile der weiteren Rastverbindung.

In den einzelnen Figuren sind die gleich wirkenden Teile mit den gleichen Bezugszeichen versehen.

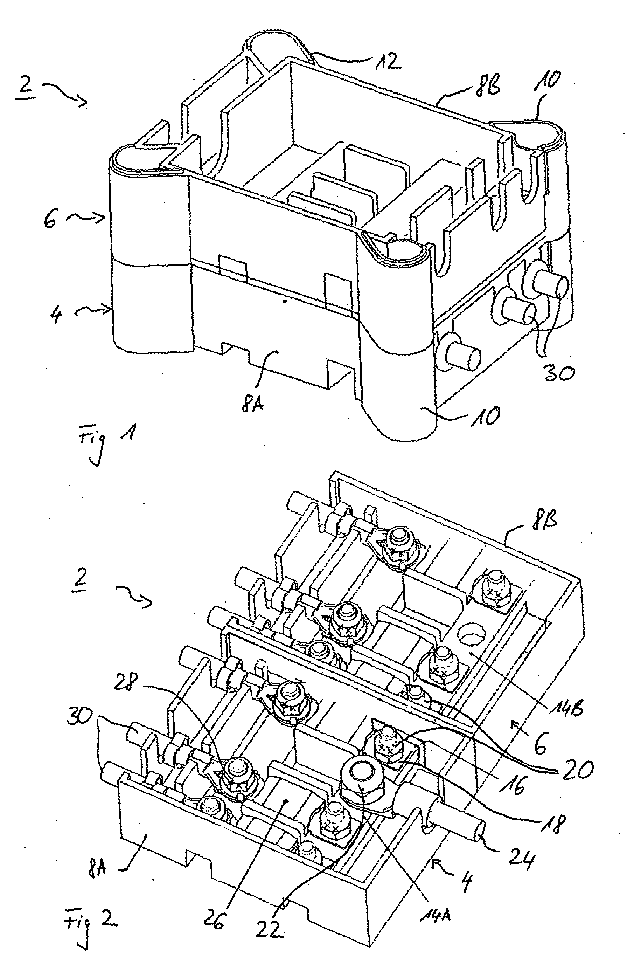

Gemäß Fig. 1 umfasst eine Sicherungsdose 2 eine Basisbox 4 und eine Erweiterungsbox 6, die aufeinander gestapelt sind. Für die Stapelbarkeit weist die Basisbox 4 ein Gehäuse 8A auf, welches randseitig an seinen Ecken vier Stapelhülsen 10 umfasst. Das Gehäuse 8B der Erweiterungsbox 6 weist die gleiche Grundfläche auf und ist insbesondere identisch mit Stapelhülsen 10 aufgebaut. Diese weisen an ihrer Oberseite einen Kragen 12 und an ihrer Unterseite eine zum Kragen 12 korrespondierende Nut (nicht zu erkennen) auf, so dass die beiden Boxen 4,6 nach Art von Bausteinen aufeinander stapelbar sind. Durch diesen Aufbau ist die Sicherungsdose 2 nach Art eines modularen Systems ausgebildet und lässt sich prinzipiell auch mit mehr als einer Erweiterungsbox 6 erweitern.

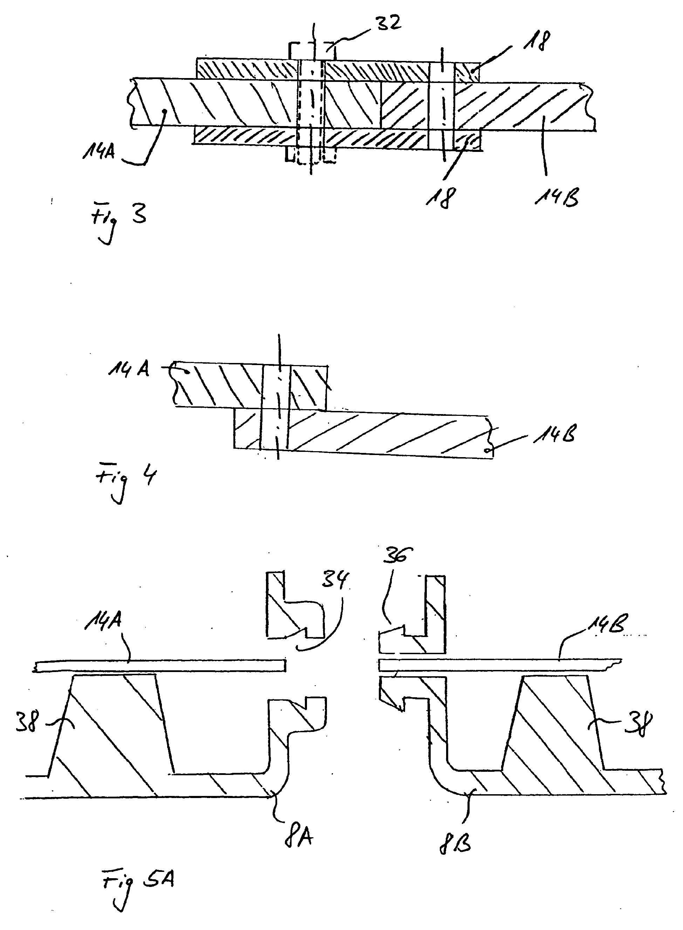

Im Unterschied zur Fig. 1 ist die Vorsicherungsdose 2 nach Fig. 2 gebildet aus der Aneinanderreihung der Basisbox 4 und der Erweiterungsbox 6. Vorzugsweise werden die beiden Boxen 4,6 hierzu aneinander geschoben oder gesteckt und beispielsweise über eine zwischen den beiden Gehäusen 8A,8B wirkende Schwalbenschwanzverbindung miteinander verbunden. Die beiden Boxen 4,6 weisen in ihrem Innenraum einen Klemmraum auf. In der Basisbox 4 ist eine erste durchgehende und unterbrechungsfreie Stromschiene 14A und in der Erweiterungsbox 6 eine zweite durchgehende und unterbrechungsfreie Stromschiene 14B angeordnet. Im Bereich der Stromschienen 14A,14B weisen die beiden Gehäuse 8A,8B jeweils eine Durchbrechung 16 auf, durch die die Stromschienen 14A,14B zur gegenseitigen Kontaktierung geführt sind. Die beiden Stromschienen 14A,14B sind beispielsweise über eine durch die Durchbrechung 16 hindurchreichende Stromleitplatte 18 verbunden, die an den beiden Stromschienen 14A,14B mit Schrauben 20 befestigt ist. Die Durchbrechung 16 wird erst ausgebildet, wenn die Erweiterungsbox 6 an die Basisbox 4 angeschlossen wird. Im Grundzustand der Basisbox ist die Durchbrechung 16 zunächst verschlossen, um die Dichtheit des Klemmraums im Innern der Basisbox zu gewährleisten. Die Durchbrechung 16 kann beispielsweise über eine Gummitülle verschlossen sein oder als ein ausbrechbares Gehäuseteil mit dünnerer Wandung ausgebildet sein.

Lediglich die erste Stromschiene 14A weist eine Batterieanschlussklemme 22 auf, an der eine Stromleitung 24 angeschlossen ist, die mit einem Pol einer hier nicht dargestellten Fahrzeugbatterie verbunden ist. Durch die Verbindung der beiden Stromschienen 14A,14B miteinander liegen diese auf gleichem Potenzial. Die Stromschienen 14A,14B sind jeweils über Sicherungen 26 mit Anschlussklemmen 28 verbunden, an denen Anschlussleitungen 30 zur Versorgung bestimmter Bordnetzteile angeschlossen sind.

Um die Kosten gering zu halten, sind die beiden Gehäuse 8A,8B vorzugsweise identisch und beispielsweise als Kunststoffspritzgussteile ausgebildet. Die notwendige Durchbrechung im Gehäuse 8A für die Stromleitung 24 ist im Grundzustand bei den Boxen 4,6 daher vorzugsweise über eine Tülle abgedichtet oder durch ein ausbrechbares Gehäusestück gebildet.

Der modulare Aufbau der Sicherungsdose 2 weist folgende Vorteile auf: Für unterschiedlichste Fahrzeug-Varianten ist eine einheitlich ausgestaltete gemeinsame Basisbox 4 vorgesehen, die einen kompakten Aufbau besitzt und daher wenig Einbauraum erfordert. Sind Erweiterungen notwendig, beispielsweise weil bestimmte Zusatzfunktionen bereitgestellt werden müssen, oder weil bestimmte Zusatzfunktionen nachgerüstet werden sollen, so ist kein Austausch der Basisbox 4 erforderlich. Ausreichend ist vielmehr die Erweiterung über die Erweiterungsbox 6. Es muss daher keine komplett neue Sicherungsdose entwickelt werden. Aufgrund des vorzugsweise identischen Aufbaus zwischen Basisbox 4 und Erweiterungsbox 6 sind viele Bauteile, wie beispielsweise Stromschienen 14A,14B, Anschlussklemmen 28 etc. gleich und müssen nicht speziell angepasst werden. Weiterhin ist nur eine Werkzeugform - eventuell mit Einsätzen mit Bereich der Anbindung von der Basisbox 4 zu der Erweiterungsbox 6 - für die Herstellung der Basisbox 4 und Erweiterungsbox 6 erforderlich. Dadurch sind die Entwicklungs- und Herstellungskosten gering gehalten. Zudem erlaubt dieses modulare System eine flexible Anpassung an die jeweiligen Anforderungen des Bordnetz-Systems. Von besonderem Vorteil ist weiterhin die direkte Verbindung der beiden Stromschienen miteinander, da hierdurch lediglich ein Anschluss zum Pol der Batterie notwendig ist. In dem üblicherweise eng begrenzten Motorraum eines Kraftfahrzeugs muss daher keine zusätzliche Leitung zur Batterie verlegt werden. Auch unter Sicherheitsaspekten ist die Versorgung über lediglich eine Stromleitung 24 von Vorteil. Zudem wird hierdurch die Montage erheblich vereinfacht. Ein weiterer wichtiger Aspekt ist darin zu sehen, dass für die Anordnung der Erweiterungsbox 6 die im eingebauten Zustand verschlossene Baisbox 4 nicht zwingend geöffnet werden muss. Dies ist zum einen im Hinblick auf die erforderliche Dichtheit als auch im Hinblick auf Sicherheitsaspekte von Vorteil. Eine Manipulation an der Basisbox 4 wäre beispielsweise sofort daran zu erkennen, dass diese unberechtigt geöffnet wurde.

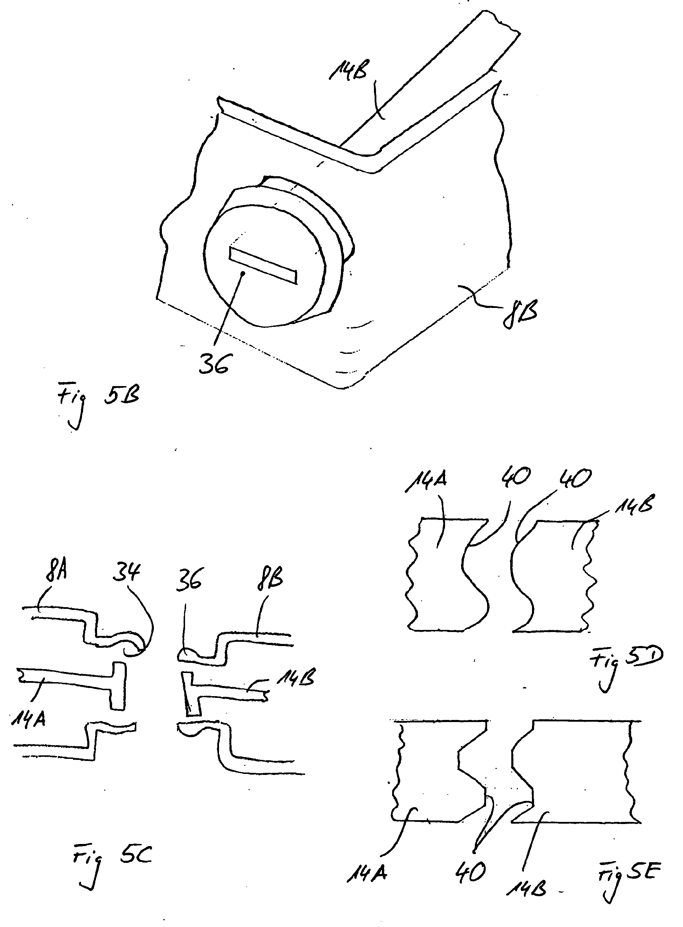

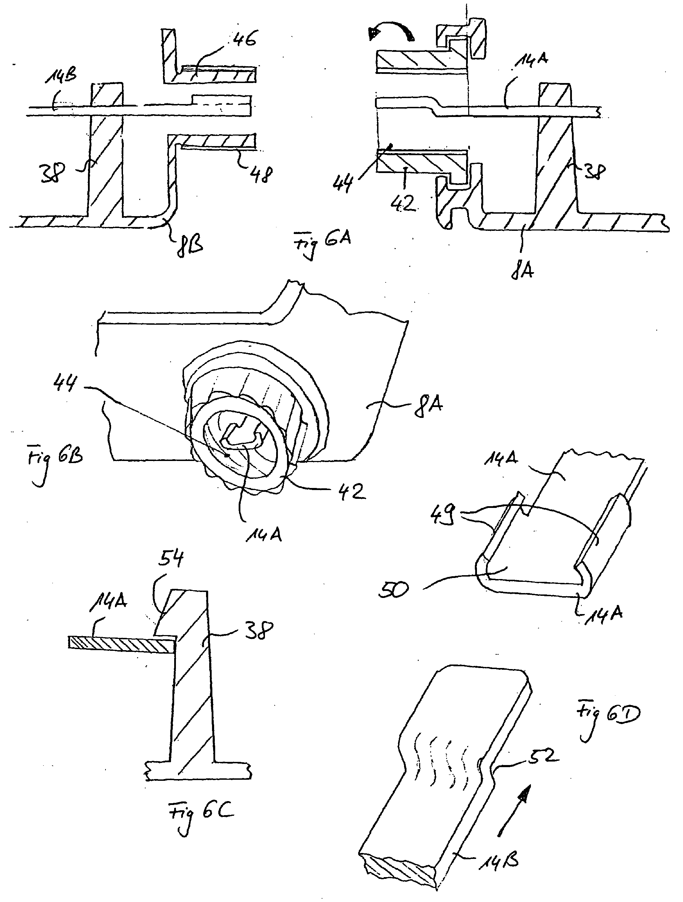

Die zu Fig. 2 bereits erwähnte Verbindung der beiden Stromschienen 14A,14B über eine Stromleitplatte 18 ist in einer vergrößerten Darstellung der Fig. 3 zu entnehmen. Gemäß diesem Ausführungsbeispiel sind die beiden Stromschienen 14A,14B zwischen zwei gegenüberliegenden Stromleitplatten 18 über Verbindungselemente 32 (gestrichelt dargestellte Schraube) eingeklemmt. Das Verbindungselement 32 ist dabei durch fluchtende Bohrungen in den Stromleitplatten 18 und den Stromschienen 14A,14B geführt. Anstelle der Verbindung über die Stromleitplatten 18 können die beiden Stromschienen 14A,14B auch überlappen und unmittelbar mit Hilfe des Verbindungselements 32 gegeneinander verspannt werden (Fig. 4).

Die beiden Gehäuse 8A,8B sind vorzugsweise derart ausgebildet und die Stromschienen 14A,14B sind derart angeordnet, dass die Verbindung der beiden Stromschienen automatisch und unmittelbar beim Verbinden der beiden Boxen 4,6 miteinander erfolgt. In Ergänzung zu dieser automatischen Verbindung kann eine zusätzliche Verbindung über ein Verbindungselement 32 erfolgen. Im Folgenden werden mehrere Ausführungsvarianten der automatischen Verbindung der beiden Stromschienen 14A,14B erläutert. Die in den Figuren dargestellten unterschiedlichen Stromschienentypen lassen sich mit den verschiedenen Gehäusetypen beliebig kombinieren, sind also nicht auf die jeweiligen in den Figuren dargestellten Stromschienen-Gehäusetypen-Paarung festgelegt.

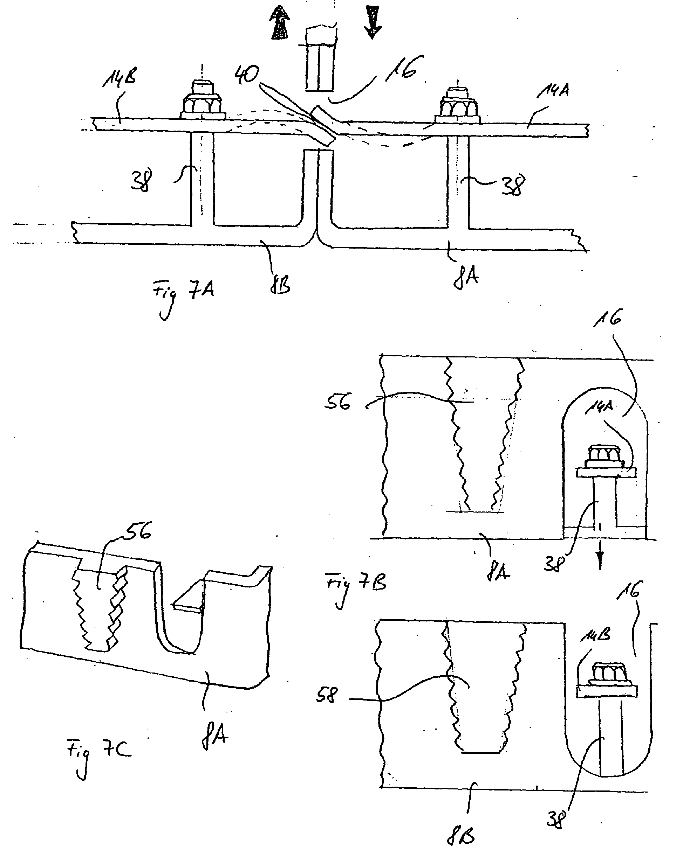

Gemäß einer ersten in den Fig. 5A - 5C dargestellten Variante werden die beiden Gehäuse 8A,8B über eine einen Hintergriff ausbildende Schnappverbindung miteinander verbunden. Hierzu weist das Gehäuse 8A eine Schnappaufnahme 34 und das Gehäuse 8B einen Schnapphaken 36 auf. Beide Elemente sind im Wesentlichen kreisrund ausgeführt und können, um die erforderliche Elastizität bereitzustellen, geschlitzt sein.

Im Bereich der Schnappelemente 34,36 ist an den Gehäusen 8A,8B jeweils ein Widerlager 38 angeformt, an dem die Stromschienen 14A,14B abgestützt sind. Die Stromschienen 14A,14B laufen zentral durch die Schnappelemente 34,36 hindurch. Beim Zusammenfügen der Gehäuse 8A,8B werden die Stromschienen 14A,B gegeneinander gepresst, wobei ihre Stirnflächen Kontaktflächen 40 bilden. Um die Kontaktfläche und die Kontaktsicherheit zu erhöhen, sind die Stromschienen 14A,14B im Bereich der Kontaktflächen 40 beispielsweise T-förmig (Fig. 5C) oder profiliert ausgestaltet, beispielsweise mit einem Wellenprofil nach Fig. 5D oder einem Zinken- oder Zapfenprofil nach Fig. 5E. Die Profilierung hat den zusätzlichen Vorteil einer Zentrierwirkung.

Bei der Ausführungsvariante gemäß den Fig. 6A - 6D werden die beiden Gehäuseteile 8A,8B aneinander geschraubt. Hierzu ist am Gehäuse 8B eine unverlierbar gehaltene Schraubenmutter 42 mit Innengewinde 44 vorgesehen. Komplementär hierzu weist das Gehäuse 8B einen zylindrischen Schraubansatz 46 mit Außengewinde 48 auf. Zur Verbindung der beiden Gehäuse 8A,8B wird die Schraubenmutter auf den Schraubansatz 46 aufgeschraubt. Hierbei werden die beiden Stromschienen 14A,14B (vgl. hierzu insbesondere Fig. 6D) ineinander zur Ausbildung einer Klemmverbindung geschoben. Die erste Stromschiene 14A weist hierzu im Kontaktbereich zwei randseitig und nach oben gebogene Klemmschenkel 49 auf, die eine Führung 50 bilden, in die die zweite Stromschiene 14B mit einem abgekröpften Teilstück bis zu einem Anschlag 52 automatisch eingeschoben wird. Auch bei dieser Ausführungsvariante ist ein in Fig. 6C in einer Seitenansicht dargestelltes Widerlager 38 vorgesehen. Hiernach ist ein Ausweichen der Stromschiene 14A durch eine Nase 54 nach oben vermieden. Alternativ hierzu kann die Stromschiene 14A auch oder zusätzlich an ihrer Unterseite geführt sein.

Bei einem weiteren Ausführungsbeispiel nach den Fig. 7A - 7C werden die beiden Gehäuse 8A,8B in Richtung der Pfeile senkrecht zur Ausbreitungsrichtung der Stromschienen 14A,14B gegeneinander und dabei ineinander verschoben. Bei den zwei vorherigen Ausführungsbeispielen wurden die Gehäuse 8A,8B in Ausbreitungsrichtung der Stromschienen 14A,14B gegeneinander verschoben bzw. ineinander gesteckt. Bei dem Ausführungsbeispiel nach den Fig. 7A - 7C ist am Gehäuse 8A ein Befestigungzapfen 56 und am Gehäuse 8B eine Zapfenaufnahme 58 ausgebildet. Diese beiden Elemente verjüngen sich jeweils in Einsteckrichtung und weisen ein gezacktes Außenprofil nach Art eines Tannenbaums auf.

Gleichzeitig sind unmittelbar neben diesen beiden Elementen 56,58 an den beiden Gehäusen 8A,8B die Durchbrechungen 16 angeordnet, die jeweils nach Art eines Halbbogens ausgeführt und zur Gehäuseunterseite bzw. Gehäuseoberseite offen sind.

Zur Kontaktierung der beiden Stromschienen 14A,14B sind diese im Bereich ihrer gegenseitigen Kontaktflächen 40 zueinander gegenläufig abgekröpft, so dass sie mit ihren abgekröpften Kontaktflächen 40 beim Zusammenfügen der beiden Gehäuse 8A,8B gegeneinander gepresst werden. Die beiden Stromschienen 14A,14B sind hierbei an einem Widerlager 38 über eine Schraube fest eingespannt. Die Stromschienen 14A,14B weisen eine gewisse Elastizität auf und sind so ausgebildet, dass sie beim gegenseitigen Kontaktieren entgegen der durch die Elastizität bedingten Federkraft aneinander gepresst werden. Hierbei ist eine Verformung der Stromschienen 14A,14B in die gestrichelt dargestellte Lage möglich.

Bei den beiden ersten Ausführungsbeispielen der Fig. 5A - 5E bzw. 6A - 6D sind die Stromschienen 14A,14B zentral durch die die beiden Gehäuse 8A,8B verbindenden Verbindungselemente geführt. Zweckdienlicherweise sind die durch diese Verbindungselemente bedingten Durchbrechungen verschließbar oder verschlossen, solange die beiden Boxen 4,6 nicht aneinander angeschlossen sind, um sowohl eine elektrische Isolierung als auch eine hermetische Abdichtung insbesondere der Basisbox 4 gegenüber der Umgebung zu gewährleisten. Hierzu kann beispielsweise vorgesehen sein, dass in die Schnappaufnahme 34 des Gehäuses 8A eine Gummitülle eingesetzt ist, oder dass in die Schraubenmutter 42 ein Dichtstopfen eingeschraubt ist. Die Durchbrechungen 16 sowie die Zapfenaufnahme

58 gemäß der Ausführungsvariante nach den Fig. 7A - 7C sind beispielsweise durch ausbrechbare Gehäuseteile oder ebenfalls durch Gummitüllen verschlossen.

### Bezugszeichenliste

- 2: Sicherungsdose
- 4: Basisbox
- 6: Erweiterungsbox
- 8A: Gehäuse
- 8B: Gehäuse
- 10: Stapelhülse
- 12: Kragen
- 14A: erste Stromschiene
- 14B: zweite Stromschiene
- 16: Durchbrechung
- 18: Stromleitplatte
- 20: Schraube
- 22: Batterieanschlussklemme
- 24: Stromleitung
- 26: Sicherung
- 28: Anschlussklemme
- 30: Anschlussleitung
- 32: Verbindungselement
- 34: Schnappaufnahme
- 36: Schnapphaken
- 38: Widerlager
- 40: Kontaktfläche
- 42: Schraubenmutter
- 44: Innengewinde
- 46: Schraubansatz
- 48: Außengewinde
- 49: Klemmschenkel
- 50: Führung
- 52: Anschlag
- 54: Nase
- 56: Befestigungszapfen
- 58: Zapfenaufnahme

## Patentansprüche

1. Sicherungsdose (2) für ein Fahrzeug mit einer ein Gehäuse (8A) aufweisenden Basisbox (2), in der eine erste Stromschiene (14A) mit einer Batterieanschlussklemme (22) angeordnet ist, die jeweils über Sicherungen (26) mit mehreren abgehenden Anschlussleitungen (30) verbunden ist, und die zur Befestigung einer eine zweite Stromschiene (14B) aufweisenden Erweiterungsbox (6) ausgebildet ist
**dadurch gekennzeichnet,**
**dass** zur Kontaktierung der beiden Stromschienen (14A,14B) eine Durchbrechung (16) am Gehäuse (8A) vorgesehen oder vorbereitet ist, die im Grundzustand ohne angeschlossener Erweiterungsbox (6) verschlossen ist.

2. Sicherungsdose (2) nach Anspruch 1,
**dadurch gekennzeichnet,**
**dass** die erste Stromschiene (14A) zur Kontaktierung mit der zweiten Stromschiene (14B) ausgebildet ist.

3. Sicherungsdose (2) nach Anspruch 1 oder 2,
**dadurch gekennzeichnet,**
**dass** bei angeschlossener Erweiterungsbox (6) deren Stromversorgung ausschließlich über die erste Stromschiene (14A) und der mit dieser verbundenen Batterieanschlussklemme (22) erfolgt.

4. Sicherungsdose (2) nach einem der vorhergehenden Ansprüche,
**dadurch gekennzeichnet,**
**dass** die beiden Stromschienen (14A,14B) bei angeschlossener Erweiterungsbox (6) unmittelbar miteinander kontaktiert sind.

5. Sicherungsdose (2) nach einem der vorhergehenden Ansprüche,
**dadurch gekennzeichnet,**
**dass** die Basisbox (2) und die Erweiterungsbox (6) aufeinander stapelbar sind.

6. Sicherungsdose (2) nach einem der vorhergehenden Ansprüche,
**dadurch gekennzeichnet,**
**dass** die Stromschienen (14A,14B) bei angeschlossener Erweiterungsbox (6) über ein Verbindungselement (32) unmittelbar gegeneinander verspannt sind.

7. Sicherungsdose (2) nach einem der vorhergehenden Ansprüche,
**dadurch gekennzeichnet,**
**dass** die Stromschienen (14A,14B) über eine Stromleitplatte (18) miteinander kontaktierbar sind.

8. Sicherungsdose (2) nach einem der vorhergehenden Ansprüche,
**dadurch gekennzeichnet,**
**dass** die beiden Stromschienen (14A,14B) komplementär zueinander zur Ausbildung einer Klemmverbindung ausgebildet sind.

9. Sicherungsdose (2) nach Anspruch 8,
**dadurch gekennzeichnet,**
**dass** die erste Stromschiene (14A) zwei Klemmschenkel (49) aufweist, die eine Führung (50) für die zweite Stromschiene (14B) bilden.

10. Sicherungsdose (2) nach Anspruch 9,
**dadurch gekennzeichnet,**
**dass** die zweite Stromschiene (14B) zur Ausbildung eines Anschlags (52) abgekröpft ist, bis zu dem sie in die Führung (50) einschiebbar ist.

11. Sicherungsdose (2) nach einem der vorhergehenden Ansprüche,
**dadurch gekennzeichnet,**
**dass** die Stromschienen (14A,14B) an ihren gegenseitigen Kontaktflächen (40) profiliert ausgebildet sind

12. Sicherungsdose (2) nach einem der vorhergehenden Ansprüche,
**dadurch gekennzeichnet,**
**dass** die Stromschienen (14A,14B) fedemd gehalten und bei angeschlossener Erweiterungsbox (6) entgegen der Federkraft gegeneinander gepresst sind.

13. Sicherungsdose (2) nach Anspruch 12,
**dadurch gekennzeichnet,**
**dass** die Stromschienen (14A,14B) im Bereich ihrer Kontaktflächen (40) entgegegengesetzt zueinander gebogen sind.

14. Sicherungsdose (2) nach einem der vorhergehenden Ansprüche,
**dadurch gekennzeichnet,**
**dass** die Stromschienen (14A,14B) derart ausgebildet und angeordnet sind, dass beim Verbinden des Gehäuses (8A) mit der Erweiterungsbox (6) die Stromschienen (14A,14B) automatisch miteinander kontaktiert werden.

15. Sicherungsdose (2) nach einem der vorhergehenden Ansprüche,
**dadurch gekennzeichnet,**
**dass** zur Verbindung des Gehäuses (8A) mit der Erweiterungsbox (6) eine Schraubverbindung (42,46) oder Rastverbindung (34,36;56,58) vorgesehen ist.

16. Sicherungsdose (2) nach Anspruch 15,
**dadurch gekennzeichnet,**
**dass** die Stromschienen (14A,14B) bei angeschlossener Erweiterungsbox (6) durch die Schraubverbindung (42,46) bzw. Rastverbindung (34,36) geführt sind.

17. Sicherungsdose (2) nach einem der vorhergehenden Ansprüche,
**dadurch gekennzeichnet,**
**dass** das Gehäuse (8A) und/oder die Erweiterungsbox (6) im Bereich der Kontaktflächen (40) der Stromschienen (14A,14B) ein Widerlager (38) für die Stomschienen (14A,14B) aufweisen.

## Claims

1. Fuse box (2) for a vehicle having a base box (2) which has a housing (8A) and in which a first busbar (14A) is arranged which has a battery connection terminal (22) and is connected, in each case via fuses (26), to a plurality of outgoing connecting lines (30), and which is designed for the attachment of an extension box (6) which has a second busbar (14B), **characterized in that**, in order to make contact between the two busbars (14A, 14B), a breakthrough (16) is provided or prepared on the housing (8A) which, in the basic state without the extension box (6) connected, is closed.

2. Fuse box (2) according to Claim 1, **characterized in that** the first busbar (14A) is designed to make contact with the second busbar (14B).

3. Fuse box (2) according to Claim 1 or 2, **characterized in that**, when the extension box (6) is connected, its power supply is provided exclusively via the first pusbar(14A) and the battery connection terminal (22) which is connected thereto.

4. Fuse box (2) according to one of the preceding claims, **characterized in that**, when the extension box (6) is connected, the two busbars (14A, 14B) are placed directly in contact with one another.

5. Fuse box (2) according to one of the preceding claims, **characterized in that** the base box (2) and the extension box (6) can be stacked one on top of the other.

6. Fuse box (2) according to one of the preceding claims, **characterized in that**, when the extension box (6) is connected, the busbars (14A, 14B) are clamped directly one against the other by means of a connecting element (32).

7. Fuse box (2) according to one of the preceding claims, **characterized in that** the busbars (14A, 14B) can be placed in contact with one another by means of a current conductor plate (18).

8. Fuse box (2) according to one of the preceding claims, **characterized in that** the two busbars (14A, 14B) are of complementary design to one another in order to form a clamping connection.

9. Fuse box (2) according to Claim 8, **characterized in that** the first busbar (14A) has two clamping limbs (49) which form a guide (50) for the second busbar (14B).

10. Fuse box (2) according to Claim 9, **characterized in that** the second busbar (14B) is bent in order to form a stop (52) up to which it can be inserted into the guide (50).

11. Fuse box (2) according to one of the preceding claims, **characterized in that** the busbars (14A, 14B) are of contoured design on their opposite contact faces (40).

12. Fuse box (2) according to one of the preceding claims, **characterized in that** the busbars (14A, 14B) are held in a sprung position and when the extension box (6) is connected they are pressed one against the other counter to the spring force.

13. Fuse box (2) according to Claim 12, **characterized in that** the busbars (14A, 14B) are bent in opposite directions with respect to one another in the region of their contact faces (40).

14. Fuse box (2) according to one of the preceding claims, **characterized in that** the busbars (14A, 14B) are designed and arranged in such a way that when the housing (8A) is connected to the extension box (6) the busbars (14A, 14B) are placed in contact with one another automatically.

15. Fuse box (2) according to one of the preceding claims, **characterized in that** a screw connection (42, 46) or latching connection (34, 36; 56, 58) is provided for connecting the housing (8A) to the extension box (6).

16. Fuse box (2) according to Claim 15, **characterized in that**, when the extension box (6) is connected, the busbars (14A, 14B) are guided by means of the screw connection (42, 46) or latching connection (34, 36).

17. Fuse box (2) according to one of the preceding claims, **characterized in that** the housing (8A) and/or the extension box (6) have/has a counterbearing (38) for the busbars (14A, 14B) in the region of the contact faces (40) of the busbars (14A, 14B).

## Revendications

1. Boîte à fusibles (2) pour un véhicule, comportant une boîte de base (2) présentant un boîtier (8A), dans laquelle est agencée une première barre conductrice (14A) avec une borne de raccord de batterie (22) qui est reliée via des fusibles (26) à plusieurs lignes de raccordement de départ (30) respectives et qui est réalisée pour fixer une boîte d'extension (6) présentant une deuxième barre conductrice (14B), **caractérisée en ce que** pour mettre en contact les deux barres conductrices (14A, 14B), une percée (16) est prévue ou préparée sur le boîtier (8A), laquelle est fermée à l'état de base sans boîte d'extension (6) branchée.

2. Boîte à fusibles (2) selon la revendication 1, **caractérisée en ce que** la première barre conductrice (14A) est réalisée pour venir en contact avec la deuxième barre conductrice (14B).

3. Boîte à fusibles (2) selon la revendication 1 ou 2, **caractérisée en ce que** lorsqu'une boîte d'extension (6) est branchée, son alimentation en courant a lieu exclusivement via la première barre conductrice (14A) et la borne de raccordement de batterie (22) reliée à celle-ci.

4. Boîte à fusibles (2) selon l'une des revendications précédentes, **caractérisée en ce que** les deux barres conductrices (14A, 14B) sont mises en contact directement l'une avec l'autre lorsqu'une boîte d'extension (6) est branchée.

5. Boîte à fusibles (2) selon l'une des revendications précédentes, **caractérisée en ce que** la boîte de base (2) et la boîte d'extension (6) peuvent être empilées l'une sur l'autre.

6. Boîte à fusibles (2) selon l'une des revendications précédentes, **caractérisée en ce que** lorsqu'une boîte d'extension (6) est branchée, les barres conductrices (14A, 14B) sont serrées directement l'une contre l'autre via un élément de liaison (32).

7. Boîte à fusibles (2) selon l'une des revendications précédentes, **caractérisée en ce que** les barres conductrices (14A, 14B) peuvent être mises en contact l'une avec l'autre via une plaque conductrice (18).

8. Boîte à fusibles (2) selon l'une des revendications précédentes, **caractérisée en ce que** les deux barres conductrices (14A, 14B) sont réalisées complémentaires l'une à l'autre pour réaliser une liaison par serrage.

9. Boîte à fusibles (2) selon la revendication 8, **caractérisée en ce que** la première barre conductrice (14A) présente deux branches de serrage (49) qui forment un guidage (50) pour la deuxième barre conductrice (14B).

10. Boîte à fusibles (2) selon la revendication 9, **caractérisée en ce que** la deuxième barre conductrice (14B) est coudée pour former une butée (52) jusqu'à laquelle elle peut être introduite dans le guidage (50).

11. Boîte à fusibles (2) selon l'une des revendications précédentes, **caractérisée en ce que** les barres conductrices (14A, 14B) sont réalisées avec un profil sur leurs surfaces de contact (40) mutuelles.

12. Boîte à fusibles (2) selon l'une des revendications précédentes, **caractérisée en ce que** les barres conductrices (14A, 14B) sont maintenues avec effet de ressort et sont pressées l'une contre l'autre à l'encontre de la force de ressort lorsqu'une boîte d'extension (6) est branchée.

13. Boîte à fusibles (2) selon la revendication 12, **caractérisée en ce que** les barres conductrices (14A, 14B) sont recourbées à l'opposé l'une de l'autre dans la région de leurs surfaces de contact (40).

14. Boîte à fusibles (2) selon l'une des revendications précédentes, **caractérisée en ce que** les barres conductrices (14A, 14B) sont réalisées et agencées de telle sorte que lorsque le boîtier (8A) est relié à la boîte d'extension (6), les barres conductrices (14A, 14B) viennent en contact automatiquement l'une avec l'autre.

15. Boîte à fusibles (2) selon l'une des revendications précédentes, **caractérisée en ce que** pour relier le boîtier (8A) à la boîte d'extension (6), il est prévu une liaison par vissage (42, 46) ou une liaison par enclenchement (34, 36 ; 56, 58).

16. Boîte à fusibles (2) selon la revendication 15, **caractérisée en ce que** lorsqu'une boîte d'extension (6) est branchée, les barres conductrices (14A, 14B) sont guidées par la liaison par vissage (42, 46) ou par la liaison par enclenchement (34, 36), respectivement.

17. Boîte à fusibles (2) selon l'une des revendications précédentes, **caractérisée en ce que** le boîtier (8A) et/ou la boîte d'extension (6) présentent une contre-butée (38) pour les barres conductrices (14A, 14B) dans la région des surfaces de contact (40) des barres conductrices (14A, 14B).
